# EUROPÄISCHE PATENTSCHRIFT

(11) **EP 1 232 689 B1**
(45) Veröffentlichungstag und Bekanntmachung des Hinweises auf die Patenterteilung: **16.06.2004**
(21) Anmeldenummer: 01103782.7
(22) Anmeldetag: 16.02.2001
(51) Int. Cl.: A01K 63/00, F16B 11/00, B32B 31/00

(54) **Verfahren zur Herstellung von Behältern aus im wesentlichen plattenformigen Elementen sowie nach dem Verfahren herstellbares Erzeugnis**
Method for manufacturing containers from substantially plate shaped elements and a product obtained thereby
Procédé pour la fabrication des récipients a base d'elements essentiellement en forme de plaque et produit ainsi obtenu

(43) Veröffentlichungstag der Anmeldung: 21.08.2002
(73) Patentinhaber: JUWEL AQUARIUM GmbH & CO. KG, D-27356 ROTENBURG/WÜMME (DE)
(72) Erfinder: Köhlmoos, Gerd, 21224 Rosengarten (DE)
(74) Vertreter: Niedmers, Ole, Dipl.-Phys.

(56) Entgegenhaltungen:
- DE-A- 19 507 387
- US-A- 3 651 975
- US-A- 3 759 224
- US-A- 3 807 357
- US-A- 5 578 153

## Beschreibung

Die Erfindung betrifft ein Verfahren zur Herstellung von Behältern aus im wesentlichen plattenförmigen Elementen, die über ein Dicht- und Verbindungsmittel zur Ausbildung des Behälters miteinander verbunden werden, umfassend Seiten- und Stirnelemente und ein Bodenelement, wobei
a. wenigstens ein Teil der Seitenelemente und/oder Stirnelemente in wenigstens einem Teil der Randbereiche ihrer zur Behälterinnenseite weisenden Flächen mit einem streifenförmig aufgebrachten Dicht- und Verbindungsmittel versehen werden und
b. nachfolgend aneinander angrenzende Seitenelemente und die Stirnelemente über das streifenförmig aufgebrachte Dicht- und Verbindungsmittel miteinander verbunden werden,
sowie ein nach dem Verfahren herstellbares Erzeugnis.

Ein Verfahren dieser Art ist bekannt (US-A-3 759 224). Diese bekannte Konstruktion benötigt zwingend einen unteren Rahmen, um einen als Aquariumgefäß ausgebildeten Behälter, der im wesentlichen aus rechteckigen Glasscheiben bzw. Glasplatten besteht, herstellen zu können. Der Rahmen weist im Querschnitt eine U-profilförmige Öffnung auf, in die dortige Seiten- und Querwände eingesetzt werden und sich dort durch die U-profilförmigen Öffnungen des Rahmens selbständig stabilisieren. Nach der Einbringung der dortigen Seiten- und Querwände in die U-profilförmigen Öffnungen des Rahmens wird ein Bodenelement eingesetzt, in dem es auf eine von der jeweiligen U-profilförmigen Öffnung rechtwinklig abstehende Auflage aufgelegt wird, wobei nachfolgend die Seiten- und Querwände über Dicht- oder Verbindungsmittel mit dem Rahmen verbunden werden.

Aus der US-A-3 651 975 ist ein zusammenklappbares, behälterförmiges Aquariumgefäß bekannt, das derart herstellbar ist, daß die einzelnen Stirn- und Seitenelemente sowie das Bodenelement in eine gesonderte Vorrichtung eingefügt werden, wobei dann die einzelnen Behälterelemente mit hoher Präzision in der Vorrichtung durch geeignete Vorrichtungsteile gehalten werden, derart, daß die Stirn- und Seitenelemente nicht aneinanderstoßen. Von außen wird dann im Sinne einer im Querschnitt dreieckförmigen Hohlnaht ein Dicht- und Verbindungsmittel manuell aufgebracht.

Bei im Stand der Technik bekannten Herstellungsverfahren von Behältern aus im wesentlichen plattenförmigen Elementen werden die einzelnen plattenförmigen Elemente, die die Seitenwände, die Stirnwände und den Boden bilden, regelmäßig mittels einer Kehlnaht aus Dicht- und Verbindungsmittel miteinander verbunden. Dieses Dichtund Verbindungsmittel ist beispielsweise Silikonkautschuk, das mittels geeignet ausgebildeter Spritzpistolen bzw. Spritzvorrichtungen auf den Verbindungsbereich jeweils zwei aufeinander liegender bzw. sich gegenseitig abstützender plattenförmiger Elemente aufgebracht wird, die den Behälter bilden. Je nach Art der Ausbildung und der Verwendung eines derart aufgebauten und zusammengefügten Behälters und der zu erwartenden Druckverhältnisse im Inneren und/oder in der den Behälter außen bildenden Umgebung können erhebliche Kräfte auf die Verbindungsnähte einwirken. Zur Gewährleistung der Eigenstabilität eines derart hergestellten Behälters und zur Gewährleistung einer Druckbeständigkeit, insbesondere bei größerem Innendruck im Behälter gegenüber dem Außendruck aufgrund seiner bestimmungsgemäßen Beladung bzw. Befüllung mit einem gewünschten Medium, müssen die die Behälterelemente verbindenden Nähte aus Dicht- und Verbindungsmittel exakt und mit fortwährend gleicher Konsistenz ausgeführt bzw. ausgebildet werden. Die Ausführung der Nähte wurde bisher ausschließlich manuell durchgeführt, und zwar durch Personen die langjährige Erfahrungen hatten und sich somit eine Fertigungstechnik angeeignet hatten, die in ausreichendem Maß eine Gewähr für eine druck- und verbindungstechnisch akzeptable Verbindungsnaht zwischen den zu verbindenden Behälterelementen gab.

Gleichwohl zeigt sich bis heute, daß die manuelle Ausbildung der Dicht- bzw. Verbindungsnähte in bezug auf die Güte der Naht von Person zu Person abwich und auch ein und dieselbe Person nicht fortwährend gleich gute Nähte über einen bestimmten Bemessungszeitraum ausführen konnte.

Ferner zeigte sich, daß die manuelle Fertigung der gattungsgemäßen Behälter in bezug auf die Menge der hergestellten Behälter pro Zeit begrenzt ist und darüber hinaus von Person zu Person unterschiedlich ist. Zudem ist die manuelle Herstellung der gattungsgemäßen Behälter auch im Vergleich zu den Kosten für die Bereitstellung des den Behälter bildenden Materials außerordentlich hoch, so daß die Gesamtentstehungskosten derart hergestellter Behälter jedenfalls für ein unteres bis mittleres Preissegment vom Markt nicht akzeptiert wurden und werden.

Es ist deshalb Aufgabe der vorliegenden Erfindung, ein Verfahren zur Herstellung von Behältern der eingangs genannten Art zu schaffen, mit dem Behälter dieser Art mit hoher Präzision mechanisch stabil und druckdicht und mit großer Geschwindigkeit hergestellt werden können und eine Gewähr dafür gegeben werden soll, daß auch bei hoher Herstellungsrate fortwährend eine gleichbleibende Güte der mittels des Dicht- und Verbindungsmittels hergestellten Naht erreicht wird, so daß derart hergestellte Behälter auch kostengünstig dem Markt zur Verfügung gestellt werden können.

Gelöst wird die Aufgabe gemäß dem erfindungsgemäßen Verfahren dadurch, daß
c. die gemäß Merkmal b. verbundenen Seitenelemente über das streifenförmig aufgebrachte Dicht- und Verbindungsmittel mit einem Bodenelement verbunden werden,
wobei wenigsten das Aufbringen des Dicht- und Verbindungsmittels auf die Seitnelemente und/oder Stirnelemente und/oder das Bodenelement mittels eines Roboters erfolgt.

Der Vorteil des erfindungsgemäßen Verfahrens besteht im wesentlichen darin, daß, wie aufgabengemäß angestrebt, mit hoher Reproduktionsrate eine gleichbleibende Güte der Ausbildung der Nähte, die die Behälterelemente dichtend verbinden, erreicht wird, wobei auch die Ausschußrate bei der Fertigung der Behälter mittels der erfindungsgemäß vorgeschlagenen Lösungsmerkmale zu Null geht. Auch ist dadurch eine hohe Herstellungsrate der Behälter in ihrer Gesamtheit erreichbar, womit das lösungsgemäße Ziel erreicht wird, nämlich derart hergestellte Behälter kostengünstig bereitstellen zu können, d.h. auch in Marktsegmente mit den derart hergestellten Behältern vordringen zu können, die bisher aufgrund der kostenintensiven Fertigung derartiger Behälter nicht erreichbar waren.

Das streifenförmige Aufbringen des Dicht- und Verbindungsmittels auf den dafür vorgesehenen Elementen des Behälters kann dabei mittels Aufbringvorrichtungen erfolgen, die entsprechend der gewünschten Dicht- und Verbindungsmittelnaht relativ zum feststehenden Element geführt und verschoben werden, es ist aber auch möglich, das Element relativ zu der gewünschten Form bzw. dem gewünschten Verlauf der Naht aus Dicht- und Verbindungsmittel zu führen und zu verschieben, wobei beide Möglichkeiten in bezug auf die dafür verwendete bzw. ausgebildete Vorrichtung kombiniert werden können und eine sowohl zweidimensionale als auch dreidimensionale Bewegbarkeit der Vorrichtung für den Auftrag des Dichtund Verbindungsmittels und/oder der Behälterteile möglich ist.

Gemäß einer vorteilhaften Ausgestaltung des Verfahrens wird das Bodenelement vor der Verbindung mit den Seitenelementen in einen das Bodenelement im wesentlichen umlaufenden Stützrahmen gelegt, so daß der (untere) Stützrahmen neben seiner Stützfunktion bei der Aufbringung der Stirn- und Seitenwände auf das Bodenelement und deren Verbindung mit dem Dicht- und Verbindungsmittel auch eine Fertigungserleichterung gewährleistet.

Vorzugsweise wird dabei der Stützrahmen Ober ein streifenförmig aufgebrachtes Dicht- und Verbindungsmittel wenigstens mit dem Bodenelement verbunden, so daß auf einfache Weise eine mechanisch ausreichend stabile Verbindung zwischen dem Bodenelement und dem Stützrahmen hergestellt werden kann.

Um eine möglichst zeitlich kurzgetaktete Fertigung der Behälter noch besser gewährleisten zu können, werden die plattenförmigen Seitenelemente und Stirnelemente in einem Vorrat, der vorzugsweise ein gestapelter Vorrat ist, für die Ausführung der Herstellung der Behälter in Bereitstellung gehalten, wobei es aus diesem Grund gleichfalls vorteilhaft ist, die Bodenelemente in einem Vorrat, vorzugsweise in einem gestapelten Vorrat, für die Ausführung der Herstellung der Behälter in Bereitstellung zu halten.

Wie vorangehend schon erwähnt, kann das Aufbringen des Dicht- und Verbindungsmittels auf die Seitenelemente und/oder die Stirnelemente und/oder das Bodenelement und ggf. auch auf den Stützrahmen zur Verbindung des Stützrahmens mit dem Bodenelement mittels geeignet verfahrbarer und geführter Vorrichtungen, die entweder die Dicht- und Verbindungsmittelaufbringeinheit verfahren und/oder das entsprechende Element oder die entsprechenden Elemente des Behälters verschieben, erfolgen, ganz besonders vorteilhaft ist es jedoch, nicht nur das Aufbringen des Dicht- und Verbindungsmittels auf die Seitenelemente und/oder die Stirnelemente und/oder das Bodenelement mittels eines Roboters erfolgen zu lassen, sondern vorzugsweise auch die Verbindung der Seitenelemente und der Stirnelemente mittels eines Roboters auszuführen und schließlich vorteilhafterweise ebenfalls die Verbindung der Seitenelemente und der Stirnelemente mit dem Bodenelement ebenfalls mittels eines Roboters auszuführen.

Der Einsatz eines Roboters für alle oder Teile der voraufgeführten Maßnahmen liegt darin, daß dieser durch entsprechende Programmierung und somit durch entsprechende Steuerung sehr leicht an unterschiedliche Ausgestaltungen der Behälter, die auch in einer derart ausgebildeten Fertigungsstraße oder -einrichtung hergestellt werden sollen, angepaßt werden kann. Die unterschiedliche Ausgestaltung des Behälters bezieht sich sowohl auf die Form als auch die Größe der Behälter sowie die Menge und die Art des dabei zur Ausbildung der Verbindungsnähte verwendeten Dicht- und Verbindungsmittels. Der Einsatz der Roboter zu den aufgeführten Zwecken unterstützt noch einmal positiv das Ziel einer schnellen und präzisen Fertigungsmöglichkeit der verfahrensgemäß hergestellten Behälter mit hoher Produktionsrate und der flexiblen Anpassungsmöglichkeit an unterschiedlich auszugestaltende Behälter und völlig frei von personengebundenen Herstellungsspezifika wie bei der im Stand der Technik bekannten manuellen Fertigungsmethode.

Wenigstens die Verfahrensschritte a. bis c. können an um einen Drehwinkel versetzten und an um diesen jeweils verdrehbaren Orten ausgeführt werden, d.h. es kann vorzugsweise eine Verfahrensführung an einem entsprechend ausgebildeten Drehtisch gewählt werden, wobei nach dem jeweiligen Fertigungstakt an einem Ort des Drehtisches die Behälterelemente an den nächsten Ort des Drehtisches durch Drehung verschoben werden, wo eine weitere Konfiguration zur endgültigen Komplettierung des Behälters ausgeführt werden kann.

Es ist vorteilhafterweise aber auch möglich, wenigstens die Verfahrensschritte a. bis c. an im wesentlichen linear voneinander beabstandeten Orten auszuführen, d.h. das Herstellungsverfahren der Behälter an linear voneinander beabstandeten Orten durchzuführen, bis der Behälter, Takt für Takt, zum endgültig fertiggestellten Behälter komplettiert worden ist.

In beiden Fällen können für die Fertigung des Behälters in jedem Taktschritt Roboter im voraufgeführten Sinn verwendet werden.

Insbesondere bei den behälterbildenden Elementen, die aus bruch- und/oder oberflächenempfindlichen Werkstoffen bestehen, ist ein Verbringen der zum Behälter zusammenzufügenden Elemente an den Ort der Aufbringung des Dicht- und Verbindungsmittels mit solchen Mitteln durchzuführen, die eine Schädigung bzw. einen Bruch der Elemente vermeiden. Um dieses zu Erreichen wird vorteilhafterweise wenigstens die Verbringung der Seitenelemente und der Stirnelemente an den Ort der Aufbringung des Dicht- und Verbindungsmittels mittels unterdruckbeaufschlagbarer, die Seiten- und/oder Stirnelemente lösbar ergreifenden Mitteln gewählt, die nach dem Prinzip der sog. unterdruckbeaufschlagbaren Sicherheitshebelklemmen funktionieren, wie sie im allgemeinen für den vertikalen und/oder horizontalen Transport von plattenförmigen Elementen wie Metallblechen und Glas verwendet werden.

Aus diesem Grund ist es ebenfalls vorteilhaft, die Verbringung des Bodenelements an den Ort der Verbindung mit den Seiten- und Stirnelementen sowie die Verbringung des Bodenelements in den Stützrahmen jeweils mittels unterdruckbeaufschlagbarer Mittel erfolgen zu lassen, die das Bodenelement lösbar ergreifen, d.h. auch nach Art der vorerwähnten Sicherheitshebeklemmen arbeiten.

Im Zuge der Herstellung des verfahrensgemäß teilweise oder im wesentlichen vollständig hergestellten Behälters kann es vorteilhaft sein, Ausrüstungs-, Betriebs- oder sonstige für die bestimmungsgemäße Verwendung des Behälters gewünschte oder erforderliche Elemente einzufügen, beispielsweise Filterelemente, die das im Behälter später beim bestimmungsgemäßen Gebrauch eingefüllte Medium filtern, reinigen oder in dieses dosiert Nährmittel oder dergleichen abgeben.

Diese Ausrüstungs-, Betriebs- oder sonstigen Elemente können beispielsweise mittels des erwähnten Dicht- und Verbindungsmittels im Behälterinneren an geeigneter Stelle fixiert werden, was im Zuge der Komplettierung des Behälters im Zuge der einzelnen zur Komplettierung des Behälters ausgeführten Verfahrensschritte erfolgen oder auch am Ende des vollständig hergestellten Behälters.

Die Verbringung des verfahrensgemäß im wesentlichen vollständig hergestellten Behälters auf ein Fördermittel, d.h. beispielsweise in eine Aushärtestation, eine Lagerstation oder zur weiteren Konfektionierung mittels weiterer Ausrüstungseinrichtungen kann vorteilhafterweise ebenfalls mittels unterdruckbeaufschlagbarer, den Behälter lösbar ergreifender Mittel erfolgen, wobei die unterdruckbeaufschlagbaren Mittel ebenfalls nach Art der vorangehend schon erwähnten Sicherheitshebeklemmen ausgestaltet sein können, so daß der im wesentlichen komplett hergestellte Behälter beschädigungsfrei aber sicher erfaßt werden kann und so auf das Fördermittel beispielsweise in Form eines Förderbandes abgestellt werden kann.

Nicht nur die Verbringung des verfahrensgemäß im wesentlichen komplett hergestellten Behälters auf ein Förderband zur weiteren Konfektionierung und dergleichen kann mittels eines Roboters erfolgen, vielmehr erfolgt gemäß einer weiteren vorteilhaften Ausgestaltung des Verfahrens die Verbringung der Seiten- und Stirnelemente an den Ort der Aufbringung des Dicht- und Verbindungsmittels und die Verbringung des Bodenelementes an den Ort der Verbindung mit den Seiten- und Stirnelementen mittels eines Roboters, so daß der gesamte Fertigungsvorgang der Behälter ohne personellen bzw. manuellen Eingriff bzw. ohne personelle und manuelle Unterstützung vonstatten gehen kann und eine schnelle Anpassung durch entsprechende Programmierung und demzufolge Steuerung des Roboters bzw. der Roboter an unterschiedlich ausgestaltete und unterschiedlich große Behälter auf einfache Weise möglich ist.

Prinzipiell ist es möglich, an jedem Ort des vorangehend beschriebenen Herstellungsverfahrens, an dem ein bestimmter Fertigungsschritt vorgenommen wird, einen Roboter vorzusehen, der nur einen einzigen Fertigungsschritt ausführt. Es ist aber auch erfindungsgemäß möglich, mehrere Fertigungsschritte bzw. -takte durch einen einzigen Roboter ausführen zu lassen. Prinzipiell ist es vorteilhafterweise auch möglich, wenigstens den Auftrag des Dicht- und Verbindungsmittels auf die Seiten- und Stirnelemente, die Verbindung der Seitenund Stirnelemente und die Verbringung der Seiten- und Stirnelemente an den Ort der Aufbringung des Dicht- und Verbindungsmittels von wenigstens einem einzigen Roboter ausführen zu lassen, was den Vorteil hat, daß beispielsweise die Gestehungskosten einer derartigen Einrichtung zur Ausführung des Verfahrens niedrig gehalten werden können. Einher geht damit aber regelmäßig bei auszuführenden vielen Verfahrensschritten zur Herstellung des Gesamtprodukts, hier des Behälters, eine Verlangsamung der Fertigungsgeschwindigkeit, so daß regelmäßig eine Maximierung dahingehend erfolgen wird, daß bei möglichst hoher Fertigungsgeschwindigkeit des herzustellenden Erzeugnisses eine möglichst geringe Zahl von Robotern vorgesehen wird, um dieses Ziel zu erreichen.

Ein nach dem Verfahren hergestelltes Erzeugnis ist vorteilhafterweise ein Aquarium- oder Terrariumbehälter, wobei der Behälter aus plattenförmigen Elementen besteht, die wenigstens teilweise aus Glas bestehen.

Die Erfindung wird nun unter Bezugnahme auf die nachfolgenden schematischen Zeichnungen anhand eines Ausführungsbeispieles eingehend beschrieben. Darin zeigen:
- Fig.1: in perspektivischer Darstellung eine Vorrichtung, mit der das erfindungsgemäße Verfahren ausgeführt werden kann, die 5 Roboter für die Fertigung umfaßt, wobei 4 der Roboter um einen als Drehtisch ausgebildeten Fertigungstisch herum angeordnet sind,

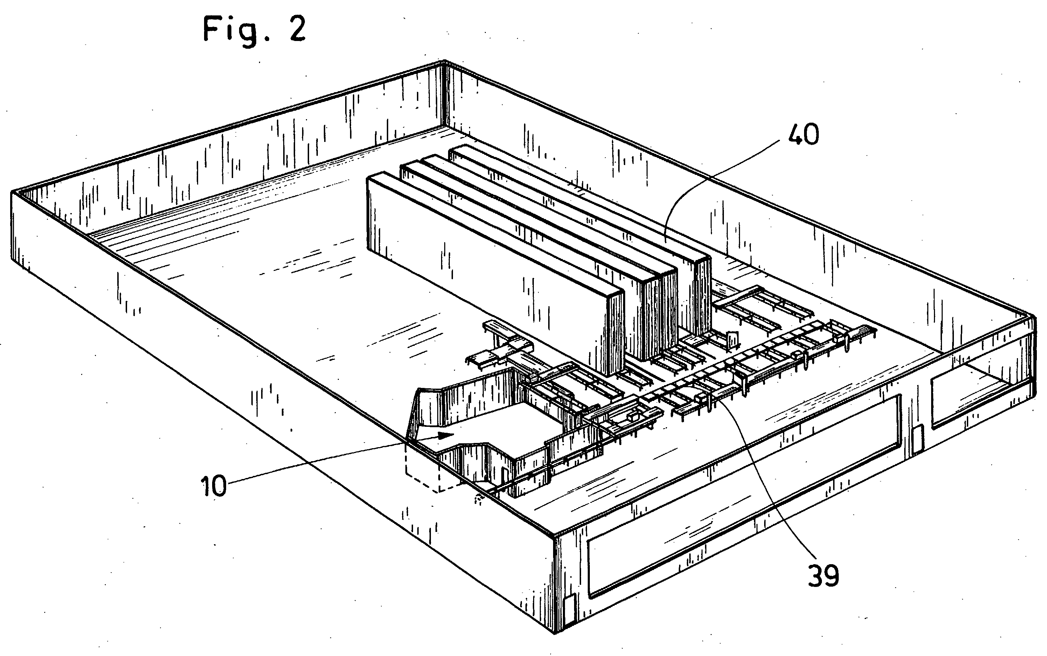

- Fig.2: in perspektivischer Darstellung eine Gesamteinrichtung, in der die Vorrichtung gemäß Fig. 1 einen Teil darstellt, wobei die Gesamteinrichtung zur Herstellung der Behälter Fördermittel sowie Aushärte- und Lagereinrichtungen umfaßt sowie eine Verpackungsstation,
- Fig. 3: in schematischer Darstellung einen Behälter in abgewickelter Darstellung, wie er mittels des Verfahrens zu einem einheitlichen Behälter zusammengefügt wird, und
- Fig. 4: eine Darstellung eines Behälters in abgewikkelter Darstellung gemäß Fig. 3, wobei aber die streifenförmigen Dicht- und Verbindungsmittel 16 an gegenüber der Darstellung von Fig. 3 teilweise anderen Seitenbereichen der Seitenelemente 12, 13 bzw. der Stirnelemente 14, 15 und des Bodenelementes 17 angebracht sind.

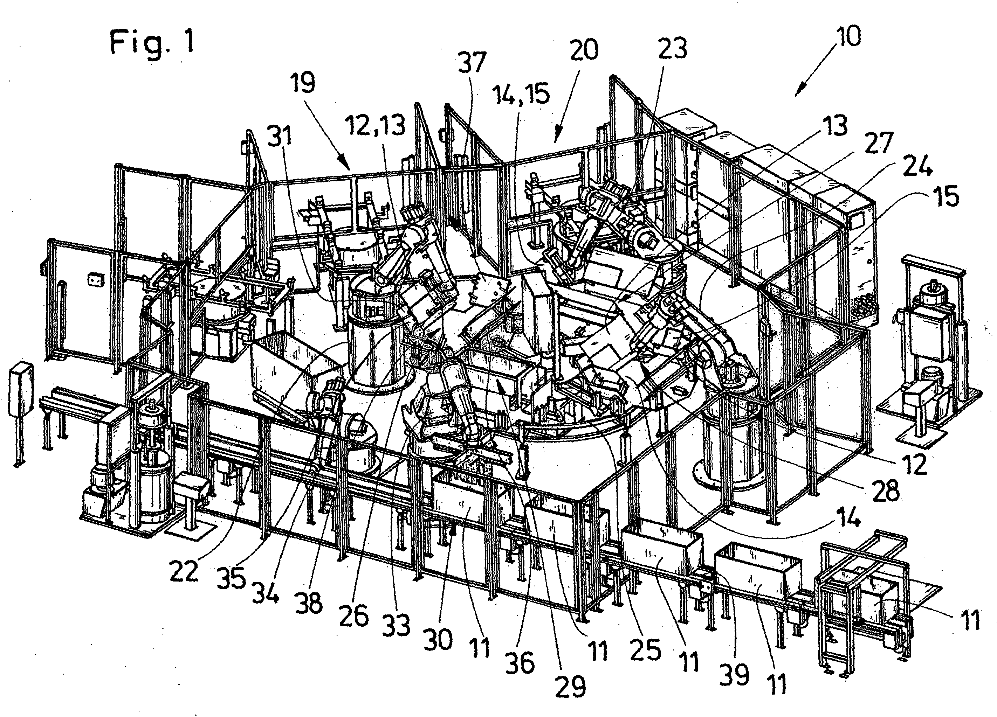

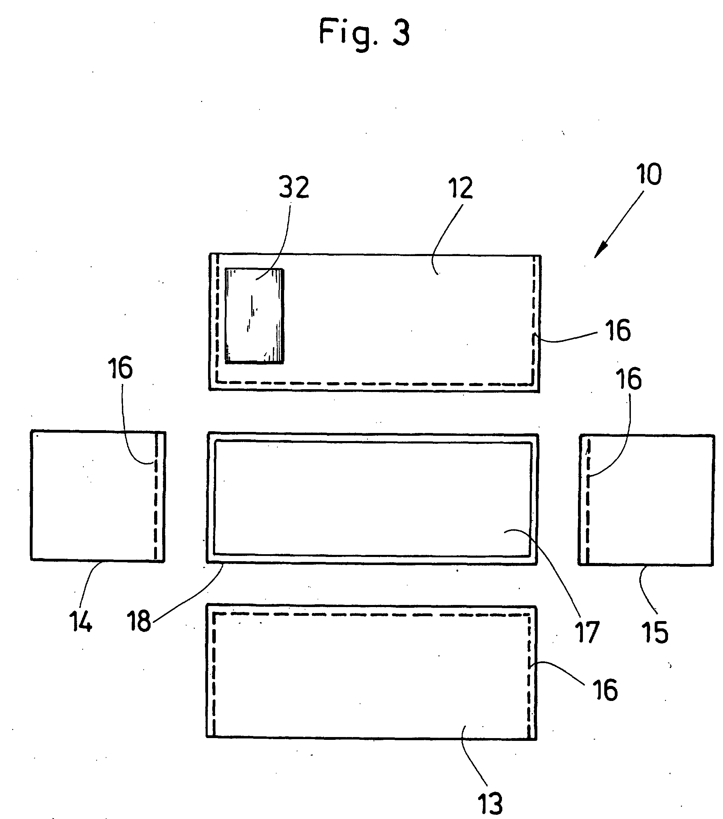

Es wird zunächst Bezug genommen auf die Darstellung von Fig. 3, in der schematisch in auseinandergezogener und abgewickelter Darstellung ein Behälter 11 dargestellt ist, der mittels des erfindungsgemäßen Verfahrens unter Zuhilfenahme der in Fig. 1 dargestellten Vorrichtung 10 hergestellt wird. Der Behälter 11 besteht aus zwei plattenförmigen Seitenelementen 12, 13 sowie zwei plattenförmigen Stirnelementen 14, 15, die mit einem plattenförmigen Bodenelement 17 über Dicht- und Verbindungsmittel 16 verbunden werden. Der Behälter 11 umfaßt darüber hinaus einen Stützrahmen 18, der ein im wesentlichen L-geformtes Querschnittsprofil aufweist und in den das Bodenelement 17 unter Zwischenlage eines geeignet dimensionierten Dicht- und Verbindungsmittels 16 (nicht dargestellt) eingelegt wird. Der Behälter 11 besteht hier aus Glasplatten und bildet in der fertigen Form, d.h. nach Abschluß des nachfolgend noch im einzelnen beschriebenen Herstellungsverfahrens ein Aquarium- bzw. Terrariumgefäß. Das nachfolgend beschriebene Verfahren eignet sich aber auch zur Herstellung von anderweitig nutzbaren Behältern, wobei die den Behälter 11 bildenden plattenförmigen Elemente aus beliebigen geeigneten Werkstoffen bzw. Werkstoffverbindungen bestehen können. Das Herstellungsverfahren wird von den jeweils gewählten Werkstoffen für die Ausbildung der Elemente nicht betroffen bzw. nicht verlassen.

In Fig. 3 sind durch gestrichelte Darstellung an drei der vier möglichen Ränder der Seitenelemente 12, 13 streifenförmige Dicht- und Verbindungsmittel 16 vorgesehen. Anstelle der Anbringung der streifenförmigen Dicht- und Verbindungsmittel 16 an den beiden Seitenelementen 12, 13 können die Dicht- und Verbindungsmittelstreifen 16 auch an den Stirnelementen 14, 15 in identischer Weise angebracht werden wie an den Seitenelementen 12, 13 oder auch zusätzlich. Grundsätzlich ist es auch möglich, auch das Bodenelement 17 zur Verbindung mit den unteren zugeordneten Seiten der Seitenelemente 12, 13 bzw. Stirnelemente 14, 15 mit Dicht- und Verbindungsmittelstreifen 16 zu versehen. Insofern ist die Darstellung gemäß Fig. 3 nicht einschränkend in bezug auf eine bestimmte Positionierung der Dicht- und Verbindungsmittelstreifen 16, vielmehr soll diese hier lediglich als ein mögliches Beispiel angesehen werden.

Die Dicht- und Verbindungsmittel 16 können auch an allen zur Verbindung miteinander bestimmten Rändern der Seitenelemente 12, 13, der Stirnelemente 14, 15 und auch des Bodenelementes 17 vorgesehen werden, und zwar vorzugsweise dann, wenn das Dicht- und Verbindungsmittel aus beispielsweise zweikomponentigem Werkstoff besteht, so daß erst im Kontakt der jeweiligen in Kontakt zu bringenden streifenförmigen Dicht- und Verbindungsmittel 16 eine Aushärtung durch die dann ablaufende chemische Reaktion der Komponenten der Dicht- und Verbindungsmittel 16 erfolgt.

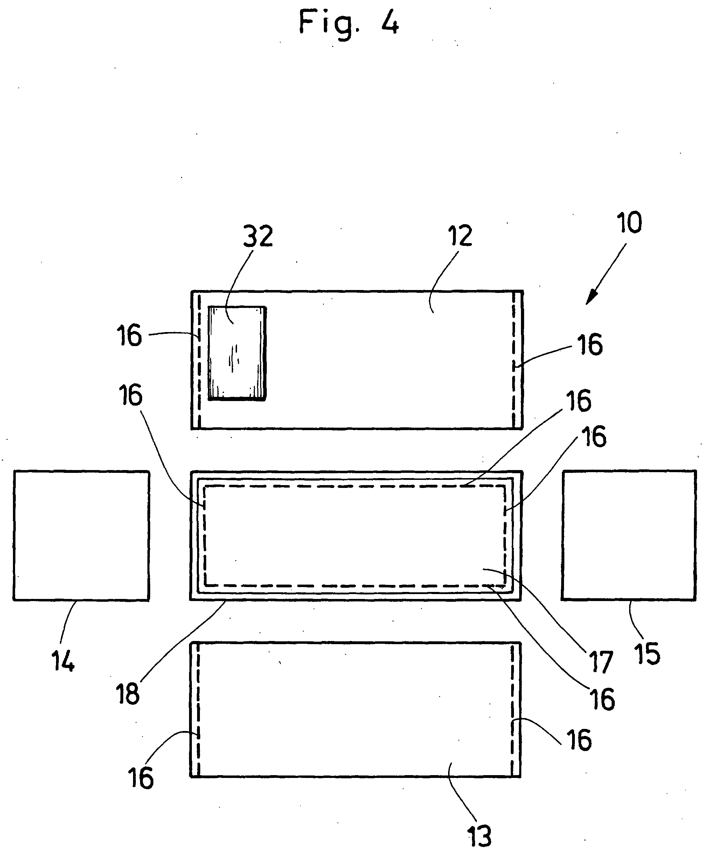

Aus Fig. 4 ist eine abgewickelte Darstellung des mittels des Verfahrens herstellbaren Behälters 10 ersichtlich, bei dem die streifenförmigen Dicht- und Verbindungsmittel 16 bei den Seitenelementen 12, 13 lediglich an den seitlichen Randbereichen angeordnet sind, die im zusammengefügten Zustand des Behälters 11 später die vertikal verlaufenden Ränder darstellen. An den Stirnelementen 14, 15 sind bei dieser Ausgestaltung des Verfahrens bzw. des Behälters 11 keine Dicht- und Verbindungsmittel 16 vorgesehen. Ein in allen Randbereichen des Bodenelementes 17 angeordnetes Dicht- und Verbindungsmittel 16 sorgt für die horizontale Verbindung der Seitenelemente 12, 13 und der Stirnelemente 14, 15 mit dem Bodenelement 17.

Im in den Fig. 3 und Fig. 4 dargestellten oberen Seitenelement 12 ist beispielhaft ein Ausrüstungs- bzw. Betriebselement 32 angeordnet, das beispielsweise bei Ausbildung des Behälters 11 als Aquariumgefäß beispielsweise ein Filter bzw. Reinigungselement sein kann. Dieses wird auf an sich beliebige geeignete Weise mit einem den Behälter 11 bildenden Element verbunden, beispielsweise mittels des Dicht- und Verbindungsmittels 16, das hier allerdings aus Übersichtlichkeitsgründen nicht dargestellt ist. An sich kann das Ausrüstungs- und Betriebselement 32 an einem beliebigen Element des Behälters 11 befestigt werden. Die Darstellung des Befestigungsortes gemäß Fig. 3 hat somit keinen einschränkenden Charakter auf den Ort der Befestigung.

Es wird jetzt Bezug genommen auf die Darstellung gemäß Fig. 1, in der eine Vorrichtung 10 dargestellt ist, mit der die vorangehend beispielhaft beschriebenen Behälter 11 gemäß dem erfindungsgemäßen Verfahren hergestellt werden können. Die Vorrichtung umfaßt hier beispielhaft vier Roboter 22, 23, 24, 33 und 34, wobei die Roboter 22, 23, 24 und 33 um einen als Drehtisch 25 ausgebildeten Fertigungstisch herum angeordnet sind. Der Drehtisch 25 kann, geeignet gesteuert, bei einem vollständigen Drehzyklus um 360° vier Grundpositionen bzw. vier Orte 26, 27, 28 und 29 einnehmen, denen jeweils in bezug auf das Voraufgeführte in bezug auf ihren Standort fest fixierten Robotern 22, 23, 24 und 33 zugeordnet sind. Auf dem Drehtisch 25 sind an den verschiedenen vier Fertigungsorten hier nicht näher zu beschreibende Fixierungsmittel für die Seitenelemente 12, 13 sowie die Stirnelemente 14, 15 vorgesehen, die mittels Unterdruck nach Art der allgemein bekannten Sicherheitshebeklemmen für den vertikalen und horizontalen Transport von plattenförmigen Elementen funktionieren und ausgebildet sind, vorgesehen. Die Fixierungsmittel an den vier Orten 26, 27, 28 und 29, an denen die unterdruckbeaufschlagbaren Mittel 31 angeordnet sind, sind geeignet gesteuert klappbar, so daß die Elemente 12, 13 sowie 14, 15 aus einer zur gedachten Ebene des Drehtisches 25 gewinkelten Stellung in eine dazu vertikale Stellung verschwenkt werden können, um den Verbindungsvorgang der einzelnen Elemente 12, 13 sowie 14, 15 miteinander vonstatten gehen zu lassen. Alle Klapp- und Fixierungseinrichtungen 35, 36, 37, 38, die auch die Fixierungsmittel für die Elemente 12, 13, 14, 15 aufnehmen, sind hier auf dem Drehtisch 25 vierfach vorhanden, so daß in vier Verfahrensschritten der Behälter 11, dann aus den vier Elementen 12, 13, 14, 15 bestehend, mit dem Bodenelement 17 verbunden werden kann.

In einem gestapelten Zustand wird ein durch einen Pfeil symbolisch dargestellter Elementenvorrat 19 relativ zum Roboter 22 positioniert, hier ein Vorrat aus Seitenelementen 12, 13, und relativ zum Roboter 23 auf entsprechende Weise ein durch einen Pfeil symbolisch dargestellter gestapelter Elementenvorrat 20, der die Stirnelemente 14, 15 bildet. Die Elementvorräte 19, 20 sind hier, wie gesagt, nur symbolisch durch die Pfeile dargestellt, es handelt sich dabei real, um bei dem hier beschriebenen Beispiel zu bleiben, um aufeinander gestapelte Glasplatten, die durch die Roboter 22, 23 mittels auch an diesen am freien Ende des Roboterarms ausgebildeten druckbeaufschlagbaren Mittel erfaßt werden und auf die Fixierungseinrichtungen 35, 36 verbracht werden, wenn sich der Drehtisch 25 am Ort 26 der Verbringung der Seitenelemente 12, 13 bzw. am Ort 27 der Verbringung der Stirnelemente 14, 15 befindet.

Sind an den Ort der Verbringung der Seitenelemente 12, 13 beide Seitenelemente verbracht und durch die unterdruckbeaufschlagbaren Mitte 31 fixiert, wird der Drehtisch 25 an den Ort 27 der Verbringung der Stirnelemente 14, 15 verdreht, wo auf gleiche Weise mittels des Roboters 23 die Stirnelemente 14, 15 vom Elementenvorrat 20 auf die Fixierungseinrichtungen 37, 38 verbracht und dort geeignet positioniert werden.

Aus Übersichtlichkeitsgründen ist lediglich eine der vier auf dem Drehtisch 25 angeordneten Fixierungseinrichtungen 35, 36, 37, 38 mit Bezugsziffern versehen.

Sind am Ort 27 der Verbringung der Stirnelemente 14, 15 diese dort geeignet auf der Fixierungseinrichtung 37, 38 fixiert, wird der Drehtisch 25 wiederum in Rotation versetzt, so daß der Ort 28 der Aufbringung des Dichtund Verbindungsmittels 16 erreicht wird. Mittels des in dieser Stellung relativ zum Drehtisch 25 feststehenden Roboters 24 wird dann das Dicht- und Verbindungsmittel 16 streifenförmig aufgebracht, vgl. auch Fig. 3 und die oben dazu aufgeführte Beschreibung.

Nachdem das Dicht- und Verbindungsmittel 16 streifenförmig aufgebracht worden ist, wird der Drehtisch 25 wiederum gedreht, so daß der Ort 29 erreicht ist, dem der Roboter 33 zugeordnet ist. An diesem Ort werden die in den ersten drei vorbeschriebenen Positionen bzw. Orten 26, 27 und 28 noch in einem Winkel relativ zum Drehtisch 25 geneigten Fixierungseinrichtungen 35, 36, 37, 38, auf dem die Seitenelemente 12, 13 bzw. die Stirnelemente 14, 15 aufliegen, in die Vertikale gedreht, so daß sich das Dicht- und Verbindungsmittel 15 mit allen bestimmungsgemäß angrenzenden Elementen des Behälters 11 verbinden kann.

Mittels des Roboters 33 wird dann der Behälter 11, dem lediglich noch das Bodenelement 14 fehlt, von den sich dann in Entnahmemodus befindlichen unterdurckbeaufschlagbaren Mitteln 31 der Fixierungseinrichtung 35, 36, 37 entfernt und auf das in einem Verfahrensschritt zuvor mit dem Stützrahmen 18 versehene Bodenelemente 17 gesetzt, so daß sich auch der Dicht- und Verbindungsmittelstreifen 16 der Seitenelemente 12, 13 bzw. der Stirnelemente 14, 15 dichtend mit dem Bodenelement 17 verbinden kann.

Das Aufsetzen bzw. Verbinden des noch bodenelementfreien Behälters 11 auf den mit dem Stützrahmen 18 vorkonfektionierten Bodenelement 17 erfolgt hier auf einem linear ausgebildeten Förderweg bzw. einem Fördermittel 39. Dieses ist allerdings hier nur beispielhaft zu verstehen. Es ist auch möglich, anstelle von vier Verbringungs- und Verbindungsorten im vorbeschriebenen Sinn auf dem Drehtisch 25 einen weiteren Ort vorzusehen, an dem die Verbindung des den Ort 29 verlassenden bodenelementfreien Behälters 11 auch auf dem Drehtisch 25 erfolgen kann.

Bei dem hier beschriebenen Beispiel der Vorrichtung 10 erfolgt die Vorkonfektionierung des Bodenelementes 17 mit dem Stützrahmen 18 mittels eines weiteren Roboters 34, der, bezogen auf das linear aufgebaute Fördermittel 39, vor dem Ort 30, bezogen auf die Darstellung von Fig. 1 dazu links, angeordnet ist. Die mit dem Stützrahmen 18 vorkonfektionierten Bodenelemente 17 gelangen dann, nachdem dieser Vorkonfektionierungsvorgang abgeschlossen ist, mittels des Fördermittels 29 in die Position gemäß Ort 30, an dem die Verbindung mit den aus den beiden Seitenelementen 12, 13 sowie den Stirnelementen 14, 15 bestehenden Behälters 11 erfolgt, indem dieser auf das vorkonfektionierte Bodenelement 17, das in Richtung des Fördermittels 39 hergefüht worden ist, abgestellt wird.

Mittels des Fördermittels 39 werden die dann fertigen Behälter 11, ggf. in dieser Konfiguration dann in einem weiteren Verfahrensschritt zusätzlich noch mit Ausrüstungs- und Betriebselementen 32 versehen, in ein Aushärtelager 40 verbracht, wo das Dicht- und Verbindungsmittel 16 über eine vorbestimmte Zeit lang aushärten kann, um seine bestimmungsgemäße Festigkeit zu erreichen. Das Aushärtelager 40 kann gleichzeitig auch Lager der verfahrensgemäß hergestellten Behälter 11 nach der Aushärtung des Dicht- und Verbindungsmittels 16 sein.

### Bezugszeichenliste

- 10: Vorrichtung
- 11: Behälter
- 12: Seitenelement
- 13: Seitenelement
- 14: Stirnelement
- 15: Stirnelement
- 16: Dicht- und Verbindungsmittelstreifen
- 17: Bodenelement
- 18: Stützrahmen
- 19: Elementvorrat (Seitenelemente)
- 20: Elementvorrat (Stirnelemente)
- 21: Elementvorrat (Bodenelemente)
- 22: Roboter (Aufbringen Seitenelement)
- 23: Roboter (Aufbringen Stirnelement)
- 24: Roboter (Aufbringen des Dicht- und Verbindungsmittels)
- 25: Drehtisch (um vorbestimmbaren Winkel verdrehbar)
- 26: Ort (Verbringung Seitenelemente)
- 27: Ort (Verbringung Stirnelemente)
- 28: Ort (Aufbringung von Dicht- und Verbindungsmittel auf Seitenelemente und Stirnelemente)
- 29: Ort (Verbindung Seitenelemente, Stirnelemente)
- 30: Ort (Verbringung der verbundenen Seitenelemente und Stirnelemente auf Bodenelement)
- 31: unterdruckbeaufschlagbare Mittel
- 32: Ausrüstungs- bzw. Betriebselement
- 33: Roboter (Verbindung der Seitenelemente und Stirnelemente)
- 34: Roboter (Verbringung Bodenelement und Einlegung in Stützrahmen)
- 35: Fixierungseinrichtung
- 36: Fixierungseinrichtung
- 37: Fixierungseinrichtung
- 38: Fixierungseinrichtung
- 39: Fördermittel
- 40: Aushärtelager

## Patentansprüche

1. Verfahren zur Herstellung von Behältern aus im wesentlichen plattenförmigen Elementen, die über ein Dicht- und Verbindungsmittel zur Ausbildung des Behälters miteinander verbunden werden, umfassend Seiten- und Stirnelemente und ein Bodenelement, wobei
a. wenigstens ein Teil der Seitenelemente und/oder Stirnelemente in wenigstens einem Teil der Randbereiche ihrer zur Behälterinnenseite weisenden Flächen mit einem streifenförmig aufgebrachten Dicht- und Verbindungsmittel versehen werden und
b. nachfolgend aneinander angrenzende Seitenelemente und die Stirnelemente über das streifenförmig aufgebrachte Dicht- und Verbindungsmittel miteinander verbunden werden,
**dadurch gekennzeichnet, daß**
c. die gemäß Merkmal b. verbundenen Seitenelemente über das streifenförmig aufgebrachte Dicht- und Verbindungsmittel mit dem Bodenelement verbunden werden,
wobei wenigstens das Aufbringen des Dicht- und Verbindungsmittels auf die Seitenelemente und/oder Stirnelemente und/oder das Bodenelement mittels eines Roboters erfolgt.

2. Verfahren nach Anspruch 1, **dadurch gekennzeichnet, daß** das Bbdenelement vor der Verbindung mit den Seitenelementen in einen das Bodenelement im wesentlichen umlaufenden Stützrahmen gelegt wird.

3. Verfahren nach Anspruch 2, **dadurch gekennzeichnet, daß** der Stützrahmen über ein streifenförmig aufgebrachtes Dicht- und Verbindungsmittel wenigstens mit dem Bodenelement verbunden wird.

4. Verfahren nach einem oder mehreren der Ansprüche 1 bis 3, **dadurch gekennzeichnet, daß** die plattenförmigen Seitenelemente und Stirnelemente in einem Vorrat für die Ausführung der Herstellung der Behälter in Bereitstellung gehalten werden.

5. Verfahren nach einem oder mehreren der Ansprüche 1 bis 4, **dadurch gekennzeichnet, daß** die Bodenelemente in einem Vorrat für die Ausführung der Herstellung der Behälter in Bereitstellung gehalten werden.

6. Verfahren nach einem oder mehreren der Ansprüche 1 bis 5, **dadurch gekennzeichnet, daß** die Verbindung der Seitenelemente und der Stirnelemente mittels eines Roboters erfolgt.

7. Verfahren nach einem oder mehreren der Ansprüche 1 bis 6, **dadurch gekennzeichnet, daß** die Verbindung der Seitenelemente und der Stirnelemente mit dem Bodenelement mittels eines Roboters erfolgt.

8. Verfahren nach einem oder mehreren der Ansprüche 1 bis 7, **dadurch gekennzeichnet, daß** wenigstens die Verfahrensschritte a. bis c. um einen Drehwinkel versetzt und um diesen jeweils verdrehbaren Orten ausgeführt werden.

9. Verfahren nach einem oder mehreren der Ansprüche 1 bis 8, **dadurch gekennzeichnet, daß** wenigstens die Verfahrensschritte a. bis c. an im wesentlichen linear voneinander beabstandeten Orten ausgeführt werden.

10. Verfahren nach einem oder mehreren der Ansprüche 1 bis 9, **dadurch gekennzeichnet, daß** wenigstens die Verbringung der Seitenelemente und der Stirnelemente an den Ort der Aufbringung des Dicht- und Verbindungsmittels mittels unterdruckbeaufschlagbarer, die Seitenund/oder Stirnelemente lösbar ergreifender Mittel erfolgt.

11. Verfahren nach einem oder mehreren der Ansprüche 1 bis 10, **dadurch gekennzeichnet, daß** die Verbringung des Bodenelementes an den Ort der Verbindung mit den Seitenund Stirnelementen mittels unterdruckbeaufschlagbarer, das Bodenelement lösbar ergreifender Mittel erfolgt.

12. Verfahren nach einem oder mehreren der Ansprüche 1 bis 11, **dadurch gekennzeichnet, daß** die Verbringung des Bodenelementes in den Stützrahmen mittels unterdruckbeaufschlagbarer, das Bodenelement lösbar ergreifender Mittel erfolgt.

13. Verfahren nach einem oder mehreren der Ansprüche 1 bis 12, **dadurch gekennzeichnet, daß** in den verfahrensgemäß teilweise oder im wesentlichen vollständig hergestellten Behälter Ausrüstungs-, Betriebs- oder sonstige für die bestimmungsgemäße Verwendung des Behälters gewünschte oder erforderliche Elemente eingefügt werden.

14. Verfahren nach einem oder mehreren der Ansprüche 1 bis 13, **dadurch gekennzeichnet, daß** die Verbringung des verfahrensgemäß im wesentlichen vollständig hergestellten Behälters auf ein Fördermittel mittels unterdruckbeaufschlagbarer, den Behälter lösbar ergreifender Mittel erfolgt.

15. Verfahren nach einem oder mehreren der Ansprüche 1 bis 14, **dadurch gekennzeichnet, daß** die Verbringung der Seiten- und Stirnelemente an den Ort der Aufbringung des Dicht- und Verbindungsmittels mittels eines Roboters erfolgt.

16. Verfahren nach einem oder mehreren der Ansprüche 1 bis 15, **dadurch gekennzeichnet, daß** die Verbringung des Bodenelementes an den Ort der Verbindung mit den Seitenund Stirnelementen mittels eines Roboters erfolgt.

17. Verfahren nach einem oder beiden der Ansprüche 15 oder 16, **dadurch gekennzeichnet, daß** wenigstens der Auftrag des Dicht- und Verbindungsmittels auf die Seiten- und Stirnelemente, die Verbindung der Seitenund Stirnelemente und die Verbringung der Seiten- und Stirnelemente an den Ort der Aufbringung des Dicht- und Verbindungsmittels von wenigstens einem einzigen Roboter ausgeführt wird.

18. Erzeugnis, hergestellt nach dem Verfahren gemäß einem oder mehreren der Ansprüche 1 bis 17, **dadurch gekennzeichnet, daß** dieses ein Aquarium- oder Terrariumbehälter (11) ist.

19. Erzeugnis nach Anspruch 18, **dadurch gekennzeichnet, daß** der Behälter aus Glas besteht.

## Claims

1. Method for manufacturing containers made of essentially plate-like elements that are joined together via a sealing and jointing material to form the container, comprising side and end-face elements and a base element, whereby
d. at least a part of the side elements and/or end-face elements are provided with a sealing and jointing material applied in the form of strips over at least a part of the edge regions of their surfaces facing towards the inside of the container, and
e. afterwards, side elements and the end-face elements adjoining one another are connected together via the sealing and jointing material applied in the form of strips,
**characterized in that**
f. the side elements joined together according to Characteristic Feature b. are attached to a base element via the sealing and jointing material applied in the form of a strip,
whereby at least the application of the sealing and jointing material to the side elements and/or end-face elements and/or to the base element takes place by means of a robot.

2. Method according to Claim 1, **characterized in that**, before being attached to the side elements, the base element is placed into a support frame that essentially surrounds the base element.

3. Method according to Claim 2, **characterized in that** the support frame is joined at least to the base element by means of a sealing and jointing material applied in strip form.

4. Method according to one or more of the Claims 1 to 3, **characterized in that** the plate-shaped side elements and end-face elements are held in readiness in a stockpile to carry out the manufacture of the containers.

5. Method according to one or more of the Claims 1 to 4, **characterized in that** the base elements are held in readiness in a stockpile to carry out the manufacture of the containers.

6. Method according to one or more of the Claims 1 to 5, **characterized in that** the attachment of the side elements and of the end-face elements takes place by means of a robot.

7. Method according to one or more of the Claims 1 to 6, **characterized in that** the attachment of the side elements and of the end-face elements to the base element takes place by means of a robot.

8. Method according to one or more of the Claims 1 to 7, **characterized in that** at least the process steps a. to c. are carried out at positions located at intervals around an angle of rotation and which are each rotatable through an angle around the latter.

9. Method according to one or more of the Claims 1 to 8, **characterized in that** at least the process steps a. to c. are performed at positions spaced a distance from one another essentially in a linear manner.

10. Method according to one or more of the Claims 1 to 9, **characterized in that** at least the transfer of the side elements and of the end-face elements to the position where the sealing and jointing material is applied takes place by means of negatively pressurisable devices that detachably grip the side and/or end-face elements.

11. Method according to one or more of the Claims 1 to 10, **characterized in that** the transfer of the base element to the position of attachment to the side and end-face elements takes place by means of negatively pressurisable devices that detachably grip the base element.

12. Method according to one or more of the Claims 1 to 11, **characterized in that** the transfer of the base element into the support frame takes place by means of negatively pressurisable devices that detachably grip the base element.

13. Method according to one or more of the Claims 1 to 12, **characterized in that** equipment elements, operating elements or other elements required or necessary for the use of the container for its intended purpose are fitted into the container that is partly or essentially completely manufactured according to the method.

14. Method according to one or more of the Claims 1 to 13, **characterized in that** the transfer of the container, essentially completely manufactured according to the method, onto a conveyor device takes place by means of negatively pressurisable devices that detachably grip the container.

15. Method according to one or more of the Claims 1 to 14, **characterized in that** the transfer of the side and end-face elements to the position where the sealing and jointing material is applied takes place by means of a robot.

16. Method according to one or more of the Claims 1 to 15, **characterized in that** the transfer of the base element to the place where the side and end-face elements are attached takes place by means of a robot.

17. Method according to one or both of the Claims 15 or 16, **characterized in that** at least the application of the sealing and jointing material to the side and end-face elements, the attachment of the side and end-face elements and the transfer of the side and end-face elements to the position where the sealing and jointing material is applied is performed by at least a single robot.

18. Product manufactured by the method according to one or more of the Claims 1 to 17, **characterized in that** it is an aquarium tank or terrarium container (11).

19. Product according to Claim 18, **characterized in that** the container consists of glass.

## Revendications

1. Procédé de fabrication de caissons à partir d'éléments sensiblement en forme de plaques, qui sont assemblés les uns aux autres par l'intermédiaire d'un moyen d'étanchéité et d'assemblage pour former le caisson, comportant des éléments latéraux et des éléments frontaux et un élément de fond, dans lequel :
a. au moins une partie des éléments latéraux et/ou des éléments frontaux sont munis, dans au moins une partie des zones de bordure de leurs faces orientées vers l'intérieur du caisson, d'un moyen d'étanchéité et d'assemblage posé en forme de bande, et
b. les éléments latéraux et les éléments frontaux adjacents sont ensuite assemblés les uns aux autres par l'intermédiaire du moyen d'étanchéité et d'assemblage posé en forme de bande,
**caractérisé en ce que**
c. les éléments latéraux, assemblés selon la caractéristique b. sont assemblés avec l'élément de fond par l'intermédiaire du moyen d'étanchéité et d'assemblage posé en forme de bande,
au moins la pose du moyen d'étanchéité et d'assemblage sur les éléments latéraux et/ou les éléments frontaux et/ou l'élément de fond étant effectuée au moyen d'un robot.

2. Procédé selon la revendication 1, **caractérisé en ce que** l'élément de fond, avant l'assemblage avec les éléments latéraux, est posé dans un cadre de support entourant sensiblement l'élément de fond.

3. Procédé selon la revendication 2, **caractérisé en ce que** le cadre de support est assemblé au moins avec l'élément de fond par un moyen d'étanchéité et d'assemblage posé en forme de bande.

4. Procédé selon une ou plusieurs des revendications 1 à 3, **caractérisé en ce que** les éléments latéraux et éléments frontaux en forme de plaques sont maintenus à disposition dans une réserve pour la procédure de fabrication des caissons.

5. Procédé selon une ou plusieurs des revendications 1 à 4, **caractérisé en ce que** les éléments de fond sont maintenus à disposition dans une réserve pour la procédure de fabrication des caissons.

6. Procédé selon une ou plusieurs des revendications 1 à 5, **caractérisé en ce que** l'assemblage des éléments latéraux et des éléments frontaux est effectué au moyen d'un robot.

7. Procédé selon une ou plusieurs des revendications 1 à 6, **caractérisé en ce que** l'assemblage des éléments latéraux et des 'éléments frontaux avec l'élément de fond est effectué au moyen d'un robot.

8. Procédé selon une ou plusieurs des revendications 1 à 7, **caractérisé en ce qu'**au moins les étapes du procédé a. à c. sont décalées selon un angle de rotation et sont effectuées autour de ces postes respectivement rotatifs.

9. Procédé selon une ou plusieurs que des revendications 1 à 8, **caractérisé en ce qu'**au moins les étapes du procédé a. à c. sont effectuées sensiblement linéairement dans des postes écartés les uns des autres.

10. Procédé selon une ou plusieurs des revendications 1 à 9, **caractérisé en ce qu'**au moins le transfert des éléments latéraux et des éléments frontaux, vers le poste de pose du moyen d'étanchéité et d'assemblage, est effectué par l'intermédiaire de moyens pouvant être sollicités par une dépression et saisissant de manière amovible les éléments latéraux et/ou les éléments frontaux.

11. Procédé selon une ou plusieurs des revendications 1 à 10, **caractérisé en ce que** le transfert de l'élément de fond vers le poste d'assemblage avec les éléments latéraux et les éléments frontaux est effectué par l'intermédiaire de moyens pouvant être sollicités par une dépression et saisissant de manière amovible l'élément de fond.

12. Procédé selon une ou plusieurs des revendications 1 à 11, **caractérisé en ce que** le transfert de l'élément de fond dans le cadre de support est effectué par l'intermédiaire de moyens pouvant être sollicités par une dépression et saisissant de manière amovible l'élément de fond.

13. Procédé selon une ou plusieurs des revendications 1 à 12, **caractérisé en ce que**, dans le caisson réalisé selon le procédé, en partie ou sensiblement en totalité, on intègre des éléments d'équipement, de service ou autres, souhaités ou nécessaires pour l'utilisation du caisson conformément à sa destination.

14. Procédé selon une ou plusieurs des revendications 1 à 13, **caractérisé en ce que** le caisson fabriqué selon le procédé sensiblement en totalité est acheminé sur un moyen de transport à l'aide de moyens pouvant être sollicités par une dépression et saisissant de manière amovible le caisson.

15. Procédé selon une ou plusieurs des revendications 1 à 14, **caractérisé en ce que** les éléments latéraux et les éléments frontaux sont transférés au moyen d'un robot vers le poste de pose du moyen d'étanchéité et d'assemblage.

16. Procédé selon une ou plusieurs des revendications 1 à 15, **caractérisé en ce que** l'élément de fond est transféré, au moyen d'un robot, vers le poste d'assemblage avec les éléments latéraux et les éléments frontaux.

17. Procédé selon l'une ou les deux revendications 15 ou 16, **caractérisé en ce qu'**au moins la pose du moyen d'étanchéité et d'assemblage sur les éléments latéraux et les éléments frontaux, l'assemblage des éléments latéraux et éléments frontaux et le transfert des éléments latéraux et éléments frontaux vers le poste de pose du moyen d'étanchéité et d'assemblage sont effectués par au moins un seul robot.

18. Produit, fabriqué selon le procédé selon une ou plusieurs des revendications 1 à 17, **caractérisé en ce que** le caisson est un caisson d'aquarium ou de terrarium (11).

19. Produit selon la revendication 18, **caractérisé en ce que** le caisson est réalisé en verre.
